# EUROPEAN PATENT APPLICATION

(11) **EP 4 664 403 A2**
(43) Date of publication of application: **17.12.2025**
(21) Application number: 25203652.0
(22) Date of filing: 07.05.2021
(51) Int. Cl.: G06T 9/00

(54) **METHOD FOR REALIZING LIVE MIGRATION, CHIP, BOARD, AND STORAGE MEDIUM**

(30) Priority: 07.05.2020 CN 202010379648
(62) Divisional of application: 21800406.7
(71) Applicant: Cambricon (Xi'an) Semiconductor Co., Ltd., Xi'an City, Shaanxi 710116 (CN)
(72) Inventor: LU, Haibo, Beijing, 100191 (CN); MENG, Xiaofu, Beijing, 100191 (CN)
(74) Representative: Boult Wade Tennant LLP

(57) **Abstract**

The present disclosure relates to a method, an apparatus and a readable storage medium for realizing live migration. A computation apparatus of the present disclosure is included in an integrated circuit apparatus, which includes a general interconnection interface and other processing apparatuses. The computation apparatus interacts with other processing apparatuses to jointly complete computation operations specified by users. The integrated circuit apparatus also includes a storage apparatus. The storage apparatus is respectively connected to the computation apparatus and the other processing apparatuses and is used for storing data of the computation apparatus and other processing apparatuses.

## Description

### CROSS REFERENCE OF RELATED APPLICATION

The present application claims priority to Chinese Patent Application No. 202010379648X with the title of "Method for Realizing Live Migration, Chip, Board, and Storage Medium" filed on May 7, 2020, the content of which is incorporated herein by reference in its entirety.

### TECHNICAL FIELD

The present disclosure generally relates to a computer field. Specifically, the present disclosure relates to a method for realizing live migration, chip, board, and computer readable storage medium.

### BACKGROUND

Live migration is also called dynamic migration or live migration, which means a virtual machine stores an operation state of the entire virtual machine through a SAVE/ LOAD program, and migrates the state from one physical server to another physical server. After recovery, the virtual machine may be operated smoothly, and users may not perceive any difference.

In an artificial intelligence field, because of high complexity of an application specific integrated circuit (ASIC), the live migration may not be fully implemented. With the development of cloud computation, all servers that adopt artificial intelligence chips in cloud need to utilize virtualization to ensure independent computation space of users. The live migration may provide stable service. Therefore, how to realize live migration on the artificial intelligence chip is a to-be-solved problem in the prior art.

### SUMMARY

To at least partly solve the technical problem mentioned in the background, solutions of the present disclosure provide a method, a chip, a board, and a computer readable storage medium for realizing live migration.

A first aspect of the present disclosure provides a system for realizing live migration. The system is connected to a kernel space, and the system includes hardware and a read only memory (ROM). The hardware is virtualized to a plurality of pieces of virtual hardware. The ROM stores firmware, which includes a physical function configured to: receive the live migration activation request from the kernel space, where the live migration activation request specifies specific virtual hardware, which is one of the plurality of virtual hardware; send a to-be-migrated instruction to the kernel space, where the to-be-migrated instruction records to-be-migrated data, which is related to the specific virtual hardware; take out the to-be-migrated data in batches from the specific virtual hardware and send the-to-be-migrated data to the kernel space; and send an end signal to the kernel space after all the to-be-migrated data is sent.

A second aspect of the present disclosure provides a system for realizing live migration. The system is connected to a kernel space, and the system includes hardware and a read only memory (ROM). The hardware is virtualized to a plurality of pieces of virtual hardware. The ROM stores firmware, which includes a physical function and a plurality of virtual functions. The physical function is configured to receive to-be-migrated data, which is related to specific virtual hardware, and the specific virtual hardware is one of the plurality of virtual hardware. The plurality of virtual functions are managed by the physical function. The specific virtual hardware corresponds to one virtual function. The physical function sends the to-be-migrated data to the specific virtual hardware through the virtual function. After sending the to-be-migrated data, the physical function may send an end signal to the kernel space.

A third aspect of the present disclosure provides: an integrated circuit apparatus, including the above-mentioned system; and a board card, including the above-mentioned integrated circuit apparatus.

A fourth aspect of the present disclosure provides a method for implementing live migration storage path to the system, and the system includes hardware, which is virtualized to a plurality of pieces of virtual hardware. The method includes: receiving a live migration activation request, which specifies specific virtual hardware, where the specific virtual hardware is one of the plurality of virtual hardware; leaving the specific virtual function unused, where the specific virtual function is corresponded to the specific virtual hardware; sending to-be-migrated data in batches from the specific virtual hardware; and sending an end signal to the kernel space after sending the to-be-migrated data.

A fifth aspect of the present disclosure provides a method for implementing live migration recovery path to the system, and the system includes hardware, which is virtualized to a plurality of pieces of virtual hardware. The method includes: receiving to-be-migrated data, which is corresponded to specific virtual hardware, and the specific virtual hardware is one of the plurality of virtual hardware; leaving specific virtual function unused, where the specific virtual function is corresponded to the specific virtual hardware; sending the to-be-migrated data to the specific virtual hardware through the specific virtual function; and sending an end signal to the kernel space after sending the to-be-migrated data.

A sixth aspect of the present disclosure provides a computer-readable storage medium, on which computer program code of live migration is stored. The above-mentioned method may be implemented when the computer program code is run by a processor.

The present disclosure may realize live migration of information of a virtualized device from a source server to a destination server.

### BRIEF DESCRIPTION OF DRAWINGS

By reading the following detailed description with reference to the drawings, other objects, features and technical effects of the exemplary embodiments of the present disclosure may become easier to understand. In the drawings, several embodiments of the present disclosure are shown in an exemplary but not a restrictive manner, and the same or corresponding reference numerals indicate the same or corresponding parts of the embodiments.
Fig. 1 is a schematic diagram of an artificial intelligence chip framework according to an embodiment of the present disclosure;
Fig. 2 is a schematic diagram of an inner structure of a computation apparatus according to an embodiment of the present disclosure;
Fig. 3 is a flowchart of a migration storage path according to an embodiment of the present disclosure;
Fig. 4 is a schematic diagram of implementing migration storage path by a source server end according to an embodiment of the present disclosure;
Fig. 5 is a flowchart of migration recovery path of an embodiment of the present disclosure;
Fig. 6 is a schematic diagram of implementing recovery path by a destination server end according to an embodiment of the present disclosure;
Fig. 7 is a structural diagram of an integrated circuit apparatus according to an embodiment of the present disclosure; and
Fig. 8 is a schematic diagram of a board card according to an embodiment of the present disclosure.

### DETAILED DESCRIPTION

Technical solutions in embodiments of the present disclosure may be described clearly and completely hereinafter with reference to the accompanied drawings in the embodiments of the present disclosure. Described embodiment are merely some rather than all embodiments of the present disclosure. All other embodiments obtained by those skilled in the art based on the embodiments of the present disclosure without creative efforts shall fall within the protection scope of the present disclosure.

It should be understood that terms such as "the first", "the second", "the third", and "the fourth" appear in the claims, the specification, and the drawings are used for distinguishing different objects rather than describing a specific order. It should be understood that the terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiments rather than limiting the present disclosure. As being used in the specification and the claim of the present disclosure, unless the context clearly indicates otherwise, the singular forms "a", "an", and "the" are intended to include the plural forms. It should also be understood that the term "and/or" used in the specification and the claims refers to any and all possible combinations of one or more of relevant listed items and includes these combinations.

As being used in this specification and the claims, the term "if" may be interpreted as "when", or "once" or "in response to a determination" or "in response to a case where something is detected" depending on the context.

Combined with drawings, the following may describe specific embodiments of the present disclosure.

The present disclosure relates to a framework that adopts a virtualization technology, and the framework is applied to an integrated circuit. For example, the framework may be applied to a machine learning device of a neural network, and the machine learning device may be a convolutional neural network accelerator. The following may take an artificial intelligence chip as an example.

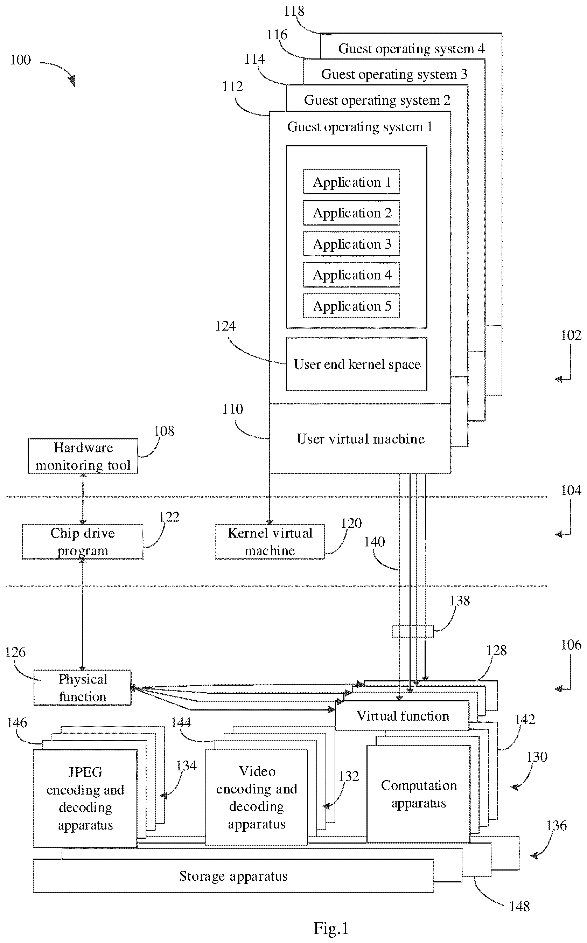

Fig. 1 is a frame diagram of virtualization of the artificial intelligence chip. The frame 100 includes a user space 102, a kernel space 104 and an on-chip system 106, which are separated by dotted lines in Fig. 1. The user space 102 is an operation space of a user program, and may only perform simple computations. The user space 102 may not directly call system resources, but may only give instructions to a kernel through a system interface. The kernel space 104 is an operation space of kernel code, and the kernel space 104 may perform any instruction and may call any resource of the system. The on-chip system 106 includes each unit of the artificial intelligence chip, and may collaborate with the user space 102 through the kernel space 104.

In this embodiment, in order to distinguish hardware of the user space 102 and hardware of the on chip system 106, hardware of the user space 102 may be called as a device, and hardware of the on-chip system 106 may be called as an apparatus or a unit. Such arrangement is only to describe technologies of the embodiment more clearly, instead of making any limitation on technologies of the present disclosure.

Unless specifically emphasized, the embodiment may virtualize one component to four virtual components as examples for explanation, but the present disclosure may not limit the number of the virtual components.

Before operating virtualization, the user space 102 is controlled by a hardware monitoring tool 108, and may obtain information of the on-chip system 106 through calling the interface. The hardware monitoring tool 108 may not only collect information of the on-chip system 106, but may obtain resource overheads on the on-chip system 106 by upper software in real time, providing real-time detailed information and state of the current on-chip system 106 to the users. These detailed information and state may be dozens of types of data, such as a hardware device model, a firmware version number, a driver version number, device utilization, a storage apparatus overhead state, board card power consumption, board card peak power consumption and a peripheral component interconnect express (PCIe). Because of different versions and usage scenarios of the hardware monitoring tool 108, content and number of the monitored information may be different.

After the system starts virtualization, operations of the user space 102 may be took over by a user virtual machine 110. The user virtual machine 110 is abstraction and simulation of the real computation environment. The system may allocate a set of data structures to manage a state of the user virtual machine 110. The set of data structures include a complete set of registers, service condition of a physical memory, a state of the virtual device, and the like. The physical space of the user space 102 of the embodiment is virtualized to four virtual spaces 112, 114, 116 and 118. These four virtual spaces are independent and will not influence each other, and may respectively carry different guest operating systems, such as a guest operating system 1, a guest operating system 2, a guest operating system 3, and a guest operating system 4 shown in the Figure. The guest operating system may be Windows, Linus, Unix, iOS, and Android, and different applications may be operated on different operating systems.

In the environment of the present disclosure, the user virtual machine 110 is realized through a quick emulator (QEMU). The QEMU is an open source virtualized software programmed in C language, and may virtualize the interface through a dynamic binary, and serve a series of hardware models to make the guest operating system 1, the guest operating system 2, the guest operating system 3 and the guest operating system 4 directly visit the on-chip system 106. The user space 102 may include a processor, a memory, an I/O device and the like. The QEMU may virtualize the processor of the user space 102 to four virtual processors, and virtualize the memory to four virtual memories, and may also virtualize the I/O device to four virtual I/O devices. Each guest operating system may take a part of the resource of the user space 102. For example, taking a quarter resource of the user space 102 means each operating system may respectively access a virtual processor, a virtual memory, and a virtual I/O device to perform a task of the guest operating system. Through this mode, the guest operating system 1, the guest operating system 2, the guest operating system 3 and the guest operating system 4 may be operated independently.

The kernel space 104 carries a kernel virtual machine 120 and a chip drive program 122. The kernel virtual machine 120 is matched with the QEMU, and the main responsibility of the kernel virtual machine 120 is to virtualize the kernel space 104 and the on-chip system 106 to make each guest operating system obtain its own address space when visiting the on-chip system 106. Specifically, space on the on-chip system 106 mapped to the guest operating system is actually a virtual component mapped to this process.

The kernel virtual machine 120 includes a physical function drive program configured to manage general functions of an SR-IOV (single root I/O virtualization) device specifically, where the physical function drive program need to have higher authority than a normal virtual machine to make operation on the general function of the SR-IOV device,. The physical function drive program includes functions of all traditional drive programs, and the user space 102 may access I/O resources of the on-chip system 106.

From the perspective of the user virtual machine 110, during the operation of the virtual machine, the QEMU calls the interface for kernel setup through the system provided by the kernel virtual machine 120. The QEMU uses the virtualization function of the kernel virtual machine 120, providing hardware virtualization acceleration for the virtual machine of the QEMU to improve performance of the virtual machine. From the perspective of the kernel virtual machine 120, when the user may not directly interact with the kernel space 104, the manage tool of the user space 102 may be needed, so that the QEMU, a tool operated in the user space 102, is needed.

A chip drive program 122 is configured to drive a physical function (PF) 126. During operation of the virtual machine, the user space 102 does not use a hardware monitor tool 108, but uses a chip drive program 122 to access an on-chip system 106. Therefore, a guest operating system 1, the guest operating system 2, the guest operating system 3 and the guest operating system 4 are respectively configured with the kernel space 124 to be loaded with the chip drive program 122, which enables each guest operating system drive the on-chip system 106.

The on-chip system 106 performs virtualization through a single root I/O virtualization (SR-IOV) technology. In particular, in the environment of the present disclosure, the SR-IOV technology may be realized through combination of software and hardware, and may virtualize each component of the on-chip system 106. The SR-IOV technology is a virtualization solution that allows PCIe resources to be effectively shared among virtual machines. The SR-IOV technology makes single PCIe resource be shared by a plurality of virtual components of the on-chip system 106, providing specific resources for these virtual components. Therefore, each virtual component may has its corresponding unique accessible resource.

The on-chip system 106 of the embodiment includes hardware and firmware. The hardware includes a read only memory (ROM that is not shown in the Figure), and the ROM is configured to store the firmware. The firmware includes the physical function 126 that is configured to support or cooperate with a PCIe function of the SR-IOV, and the physical function 126 has the power to fully configure the PCIe resource. When implementing the SR-IOV technology, the physical function 126 may virtualize to a plurality of virtual functions (VF) 128, and there are four virtual functions 128 in this embodiment. The virtual function 128 is a lightweight PCIe function that is managed by the physical function 126, and may share the PCIe physical resource with the physical function 126 and other virtual functions 128 related to the same physical function 126. The virtual function 128 is only allowed to control the resource allocated by the physical function 126 to the virtual function 128.

Once the SR-IOV is enabled in the physical function 126, each virtual function 128 may access its own PCIe configuration space through its bus, device and function number. Each virtual function 128 may have one memory space configured to map a register set of the virtual function 128. The drive program of the virtual function 128 operates on the register set to enable the function of the register set, and the drive program of the virtual function 128 may be directly designated to the corresponding user virtual machine 110. Even if the virtual function 128 is virtual, the user virtual machine 110 may consider the virtual 128 as a real PCIe device.

Hardware of the on-chip system 106 also includes a computation apparatus 130, a video encoding and decoding apparatus 132, a JPEG (joint photographic experts group) encoding and decoding apparatus 134, a storage apparatus 136 and a PCIe 138. In this embodiment, the computation apparatus 130 is an intelligence processing unit (IPU) configured to execute a convolution computation of the neural network; the video encoding and decoding apparatus 132 is configured to encode and decode video data; the JPEG encoding and decoding apparatus 134 is configured to encode and decode a static picture that adopts a JPEG algorithm; the storage apparatus 136 may be a dynamic random access memory (DRAM) configured to store data; and the PCIe 138 is the above-mentioned PCIe. During the operation of the virtual machine, the PCIe 138 may be virtualized to four virtual interfaces 140. The virtual functions 128 have a one to one correspondence with the virtual interfaces 140; in other words, a first virtual function corresponds to a first virtual interface, and a second virtual function corresponds to a second virtual interface, and the like.

Through the SR-IOV technology, the computation apparatus 130 is virtualized to four virtual computation apparatuses 142, the video encoding and decoding apparatus 132 is virtualized to four virtual video encoding and decoding apparatuses 144, the JPEG encoding and decoding apparatus 134 may be virtualized to four virtual JPEG encoding and decoding apparatuses 146, and the storage apparatus 136 may be virtualized to four virtual storage apparatuses 148.

Each guest operating system is configured with a set of virtual suites, and each set of the virtual suite includes one user virtual machine 110, one virtual interface 140, one virtual function 128, one virtual computation apparatus 142, one virtual video encoding and decoding apparatus 144, one virtual JPEG encoding and decoding apparatus 146, and one virtual storage apparatus 148. Each set of the virtual suites may be operated independently without affecting each other, and the virtual suite is configured to perform the delivered tasks from the corresponding guest operating system, so as to make sure that each guest operating system may access the configured virtual computation apparatus 142, the virtual video encoding and decoding apparatus 144, the virtual JPEG encoding and decoding apparatus 146 and the virtual storage apparatus 148 through the configured virtual interface 140 and the virtual function 128.

Specifically, when performing tasks, the guest operating system may need to access different hardware in response to different tasks. For example, if one task is to perform a matrix convolution computation, the guest operating system may access the configured virtual computation apparatus 142 through the configured virtual interface 140 and the virtual function 128; if one task is to perform video encoding and decoding, the guest operating system may access the configured virtual video encoding and decoding apparatus 144 through the configured virtual interface 140 and the virtual function 128; if one task is to perform JPEG encoding and decoding, the guest operating system may access the configured virtual JPEG encoding and decoding apparatus 146 through the configured virtual interface 140 and the virtual function 128; if one task is to read or write data, the guest operating system may access the configured virtual storage apparatus 148 through the configured virtual interface 140 and the virtual function 128.

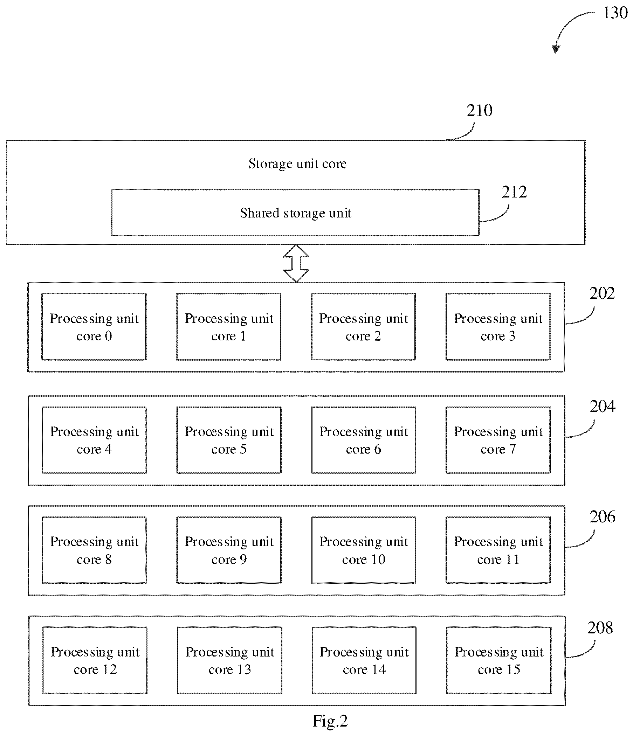

Fig. 2 is a schematic diagram of an inner structure of a computation apparatus 130. The computation apparatus 130 has 16 processing unit cores (a processing unit core 0 to a processing unit core 15) configured to perform a matrix computation task, and every four processing unit cores constitute a processing unit group, which is a cluster. Specifically, the processing unit core 0 to a processing unit core 3 constitute a first cluster 202, a processing unit core 4 to a processing unit core 7 constitute a second cluster 204, a processing unit core 8 to a processing unit core 11 constitute a third cluster 206, and a processing unit core 12 to the processing unit core 15 constitute a fourth cluster 208. The computation apparatus 130 basically performs computation tasks through making cluster as a unit.

The computation apparatus 130 also includes a storage unit core 210 and a shared storage unit 212. The storage unit core 210 is mainly configured to control data exchange, and the storage unit core 210 is the communication channel of the computation apparatus 130 and a storage apparatus 136. The shared storage unit 212 is configured to store computation intermediate values of these clusters 202, 204, 206 and 208 temporarily. During virtualization operation, the storage unit core 210 may be divided to four virtual storage unit cores, and the shared storage unit 212 may also be divided into four virtual shared storage units.

Each virtual computation apparatus 142 may be respectively configured with a virtual storage unit core, a virtual shared storage unit and a cluster to support tasks of a specific guest operating system. Similarly, each virtual computation apparatus 142 may be operated independently without interfering each other.

The number of clusters of the computation apparatus 130 may be at least equal to the number of clusters of the virtual computation apparatus 142 to make sure that each virtual computation apparatus 142 may be configured with one cluster. When the number of clusters is higher than the number of the virtual computation apparatus 142, the clusters may be properly configured to the virtual computation apparatuses 142 according to real demands to increase elasticity of hardware configuration.

A video encoding and decoding apparatus 132 of the embodiment includes six video encoding and decoding units. The video encoding and decoding apparatus 132 may elastically make adjustment and deployment with video encoding and decoding unit as a unit according to the number of virtual components and required resources. For example, the video encoding and decoding apparatus 132 is virtualized to four virtual video encoding and decoding apparatuses 144. Assuming a first virtual video encoding and decoding apparatus and a second virtual video encoding and decoding apparatus need more video encoding and decoding resources, the first virtual video encoding and decoding apparatus and the second virtual video encoding and decoding apparatus may be respectively configured with two video encoding and decoding units, and each of other virtual video encoding and decoding apparatuses 144 may be configured with one video encoding and decoding unit. For another example, the video encoding and decoding apparatus 132 is virtualized to three virtual video encoding and decoding apparatuses 144. When no virtual video encoding and decoding apparatus needs more video encoding and decoding resources, each virtual video encoding and decoding apparatus 144 may be configured with two video encoding and decoding units.

The number of video encoding and decoding units may at least be equal to the number of virtual video encoding and decoding apparatus 144 to make sure that each virtual video encoding and decoding apparatus 144 may be configured with one video encoding and decoding unit. When the number of video encoding and decoding units is higher than the number of virtual video encoding and decoding apparatus 144, the video encoding and decoding unit may be properly configured to the virtual video encoding and decoding apparatus 144 according to real demands to increase elasticity of the hardware configuration.

Similarly, the JPEG encoding and decoding apparatus 134 of the embodiment includes six JPEG encoding and decoding units. The JPEG encoding and decoding apparatus 134 may elastically make adjustment and deployment with the JPEG encoding and decoding unit as a unit, according to the number of virtual components and required resources. The method of adjustment and deployment is the same to that of the video encoding and decoding apparatus 132 and will not be repeated here.

The storage apparatus 136 may adopt a non-uniform memory access (NUMA) architecture, including a plurality of DDR (double data rate) channels. The storage apparatus 136 may elastically make adjustment and deployment with the DDR channel as a unit according to the number of virtual components and required resources. The method of adjustment and deployment is the same to the method of adjustment and deployment of the computation apparatus 130, the video encoding and decoding apparatus 132, and the JPEG encoding and decoding apparatus 134, and the method may not be repeated here.

Based on the above-mentioned exemplary framework, the live migration solution of the present disclosure is divided into two stages: in a first stage, configuration and data on a source server are packed and sent to a destination server, which is a migration storage path; and in a second stage, these configuration and data are put to corresponding place in the destination server, which is a migration recovery path. The live migration solution is to completely keep the operation state of the whole virtual machine, and recover the operation state to an original hardware platform or even different hardware platforms; in other words, the source server and the destination server may be in a same hardware platform or different hardware platforms. After recovery, the virtual machine may be operated smoothly, and users may not perceive any difference. The above-mentioned two stages will be described respectively.

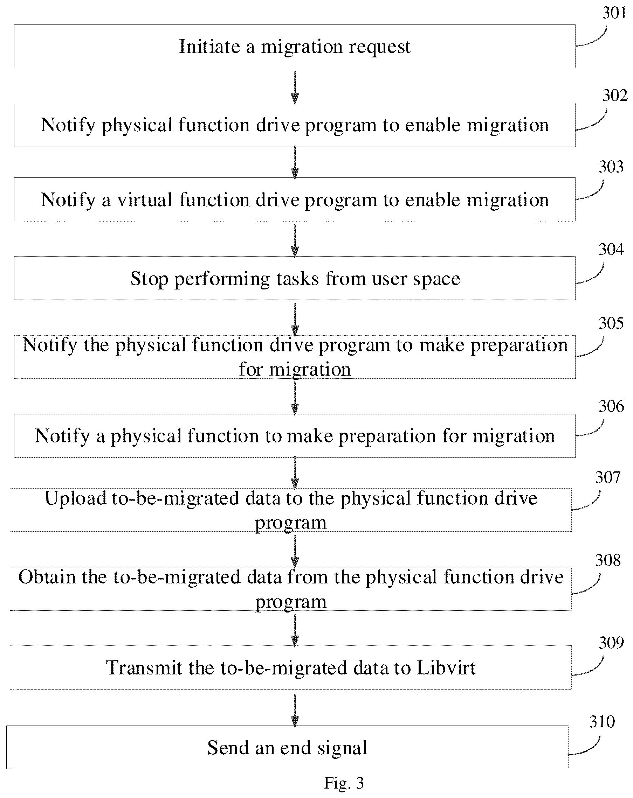

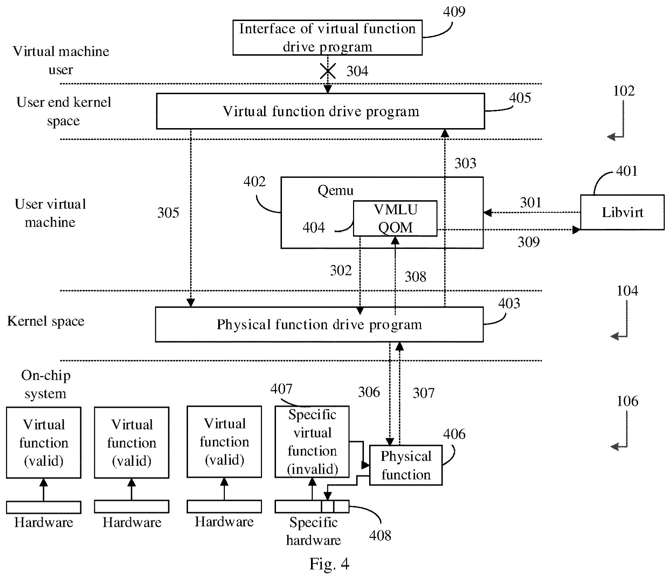

Fig. 3 is an embodiment of the present disclosure, and is a flowchart of a migration storage path. A source server of the embodiment may be the system shown in Fig. 1. Fig. 4 is a schematic diagram of performing the migration storage path by the source server with the architecture of Fig. 1. In this embodiment, when the user space 102 is operating, drive program, firmware and hardware information, context information and state information of specific virtual hardware on the on-chip system 106 is packed and sent from the source server end. The state information may include state information of the drive program of the virtual, state information of firmware and hardware of the virtual function, context state information of a state machine, a register, inner state of the hardware, context state information of a state machine of software, context state information of a variable and a constant when the variable and the constant are operated.

In a step 301, virtualization management software initiates a migration request to a QEMU 402. The virtualization management software of this embodiment is Libvirt 401, which is an open source application programming interface (API) configured to manage the virtualized platform, and the Libvirt 401 is a background program and a management tool. Libvirt 401 may be configured to manage a virtualization technology of the QEMU 402. When the on-chip system 106 breaks down, or the on-chip system has such condition as uneven distribution of resources (such as overload or underload), Libvirt 401 may enable live migration to make sure a normal operation of businesses of the virtual machine.

In a step 302, the QEMU 402 notifies a physical function drive program 403 to enable migration; in other words, the QEMU 402 initializes a live migration activation request. This embodiment provides a model to manage the process of the whole migration storage path, and the model is a virtual machine learning unit QEMU (VMLU QOM), where the virtual machine learning unit focuses on the virtualization artificial intelligence on-chip system shown in Fig. 1, and the QEMU object model simulates relation between a processor with specific architecture and a bus and simulates relation between an apparatus and the bus.

In simulating processors with specific architectures, aiming at characters of the artificial intelligence on-chip system shown in Fig.1, the VMLU QOM 404 simulates models of the processor. In simulating relation between the apparatus and the bus, because the on-chip system 106 may communicate with the kernel space 104 through a PCIe 138, the connecting relation between the apparatus and the bus is simulated by the VMLU QOM 404.

Interaction between the user space 102 and the physical function drive program 403 is realized through a memory mapping I/O (MMIO) of the VMLU QOM 404. The memory mapping I/O is a part of PCI (Peripheral Component Interconnect) norms, and an I/O device is put in the memory space instead of an I/O space. From the perspective of the processor of the user space 102, after the memory maps the I/O, visiting other devices by the system is the same as visiting the memory by the system, thereby simplifying difficulty of the program design and complexity of the interface.

In this step, the VMLU QOM 404 in the QEMU 402 initializes the live migration activation request, and sends the live migration activation request to the physical function drive program 403.

In a step 303, the physical function drive program 403 notifies the virtual function drive program 405 to initialize the migration. The virtual function drive program 405 is stored in the virtual machine kernel space. Based on the memory mapping I/O of the VMLU QOM 404, hardware of the on-chip system 106 seems like a memory from the perspective of the virtual function drive program 405, and read and write operations on the memory mapping I/O space (which is the on-chip system 106) by the virtual function drive program 405 may be caught and managed by the VMLU QOM 404. For the read operation, the VMLU QOM 404 may return required return values according to the demand of the virtual function drive program 405 to make the virtual function drive program 405 and the physical function drive program 403 operate synchronously.

The VMLU QOM 404 obtains a migration state of the physical function drive program 403 through calling an interface of the physical function drive program 403. When the virtual function drive program 405 wants to read a memory mapping I/O space of the VMLU QOM 404, the VMLU QOM 404 may return a state of the physical function 406 to the virtual function drive program 405. In this step, the VMLU QOM 404 passes a state of the physical function drive program 403 prepared for the live migration to the virtual function drive program 405.

In a step 304, the virtual function drive program 405 stops performing tasks from the processor of the user space 102. In a method adopted by this embodiment, the virtual function drive program 405 does not return the control instruction to the guest operating system of the user space 102. Without receiving the control instruction, the guest operating system may keep waiting, and may not send a next task to the virtual function drive program 405, so that tasks of the user space end may be stopped temporarily.

In a step 305, the virtual function drive program 405 notifies the physical function drive program 403 to make preparation for migration. When suspends an execution task from the user space 102, the virtual function drive program 405 notifies the physical function drive program 403 that the user space 102 is ready, so that there may be no instruction interference during the live migration.

In a step 306, the physical function drive program 403 notifies a physical function 406 to make preparation for migration. The physical function drive program 403 sends the live migration activation request to the physical function 406, and the live migration activation request specifies a specific virtual hardware 408 for the live migration. The specific virtual hardware 408 is one of the plurality of virtual hardware of the on-chip system 106; in other words, the live migration activation request records a request to perform live migration on the specific virtual hardware 408. For convenient description, it is assumed that the live migration activation request is aiming at the specific virtual function 407 and its corresponding specific virtual hardware 408.

The specific virtual hardware 408 may be a specific virtual computation apparatus, such as the virtual computation apparatus 142 in Fig. 1. The to-be-migrated data includes a computation intermediate value stored in the virtual shared storage unit and data stored in a virtual storage unit core. The specific virtual hardware 408 may be the specific virtual storage apparatus 148 in Fig. 1, and the to-be-migrated data includes data stored in the specific virtual storage apparatus 148. The specific virtual hardware 408 may be the virtual video encoding and decoding apparatus 144 or the virtual JPEG encoding and decoding apparatus 146, and the to-be-migrated data includes corresponding encoding and decoding information.

In a step 307, the physical function 406 uploads data of information of the drive program of the specific virtual function 407, data of information of firmware and the specific virtual hardware 408, data of context information and state information to the physical function drive program 403. First, the physical function 406 sends the to-be-migrated instruction to the physical function drive program 403 of the kernel space 104. The to-be-migrated instruction records to-be-migrated data relates to the specific virtual hardware 408, which makes the physical function drive program 403 know how much data is needed to be migrated. Then, the physical function 406 responses to the live migration activation request, leaves the specific virtual function 407 unused, and makes the specific virtual function 407 stop communication with the user space 102 temporarily, but other virtual functions and corresponding virtual hardware run as usual. After leaving the specific virtual function 407 unused, the physical function 406 takes out the to-be-migrated data in batches from the specific virtual hardware 408, and sends the to-be-migrated data to the physical function drive program 403. After sending the to-be-migrated data, the physical function 406 sends the end signal to the physical function drive program 403.

In a step 308, the VNLU QOM 404 obtains the to-be-migrated data from the physical function drive program 403. The physical function drive program 403 of the kernel space sends the to-be-migrated instruction to the VMLU QOM 404 in the user virtual machine first, and then sends the to-be-migrated data to the VMLU QOM 404. After receiving the to-be-migrated instruction, the VMLU QOM 404 calls a read function to obtain the to-be-migrated data from the physical function drive program 403.

In a step 309, the VMLU QOM 404 transmits the to-be-migrated data to the Libvirt 401.

In a step 310, after sending the to-be-migrated data, the physical function 406 releases resources of the specific virtual hardware 408 and the specific virtual function 407; the VMLU QOM 404 sends the end signal to the virtual function drive program 405; the virtual function drive program 405 sends a control signal to an interface 409 of the virtual function drive program; and the guest operating system continues to send tasks.

Through the above-mentioned process, the embodiment realizes a migration storage path. At the same time in performing the above-mentioned process, the non-specific virtual function and the hardware may still perform tasks from the user space 102 without being affected.

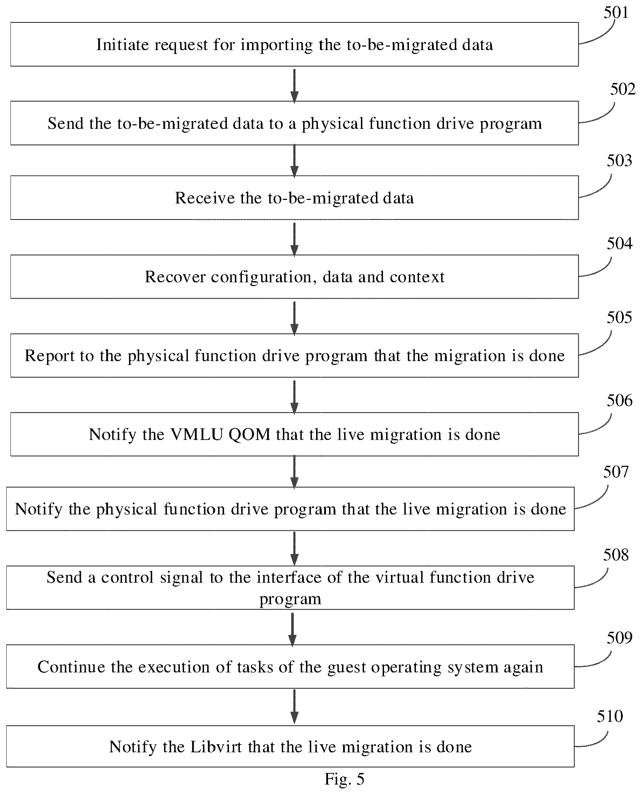

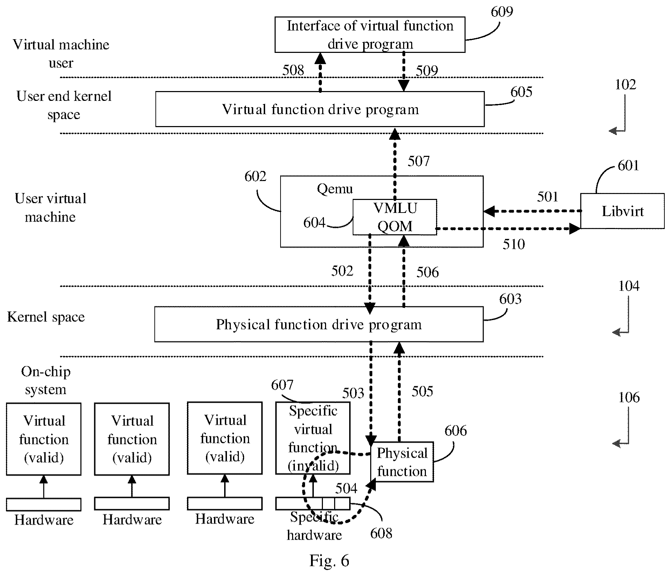

Another embodiment of the present disclosure is a migration recovery path. The destination server of the embodiment is the system shown in Fig. 1, and the destination server has the same environment with the source server. Fig. 5 is a flowchart of the migration recovery path. Fig. 6 is a schematic diagram of the migration recovery path in the environment of Fig. 1. Specifically, this embodiment migrates the to-be-migrated data to the destination server after the migration storage path of embodiments in Fig.3 and Fig. 4 is completed.

In a step 501, the Libvirt 601 sends a request to the QEMU 602, aiming at importing the to-be-migrated data to the QEMU 602. From an off-chip, the QEMU 602 receives the to-be-migrated data sent from the previous embodiment, and initializes the live migration activation request. The off-chip refers to the source server, which may be in the same hardware platform with the destination server or in different hardware platforms with the destination server.

In a step 502, the VMLU QOM 604 sends the to-be-migrated data to a physical function drive program 603. After receiving the to-be-migrated data, the VMLU QOM 604, in response to the live migration activation request, calls a write function to send the to-be-migrated data to the physical function drive program 603.

In a step 503, a physical function 606 receives the to-be-migrated data. In the previous step, the VMLU QOM 604 sends the to-be-migrated data to the physical function drive program 603, and then the physical function drive program 603 sends the to-be-migrated data to the physical function 606.

In a step 504, aims at a specific virtual function 607 and a specific virtual hardware 608, configuration, data and context are recovered.

First, the physical function 606 leaves the specific virtual function 607 unused, and makes the specific virtual function 607 stop communication with the user space 102 temporarily, but other virtual functions may run as usual. After leaving the specific virtual function 607 unused, the physical function 606 sends the the to-be-migrated data to the specific virtual hardware 608 through the specific virtual function 607.

Similarly, the specific virtual hardware 608 may be the virtual computation apparatus, the specific virtual storage apparatus, the virtual video encoding and decoding apparatus or the virtual JPEG encoding and decoding apparatus in Fig. 1. The to-be-migrated data includes information of drive program, firmware and hardware, context information and state information related to the specific virtual hardware 608. After recovery, the specific virtual function 607 and the specific virtual hardware 608 have the same environment and data as the specific virtual function 407 and the specific virtual hardware 408.

In a step 505, the physical function 606 reports to the physical function drive program 603 that the migration is done. After sending the to-be-migrated data, the physical function 606 may send the end signal to the physical function drive program 603 of the kernel space 104.

In a step 506, the physical function drive program 603 notifies the VMLU QOM 604 that the live migration is done; in other words, the physical function drive program 603 sends the end signal to the QEMU 602.

In a step 507, the VMLU QOM 604 changes the state to notify the virtual function drive program 605 that the live migration is done. The VMLU QOM 604 responses to the end signal, notifies the virtual function drive program 605 that the live migration is done, and changes a state of a base address register simultaneously to make the base address register point to a specific virtual function 607 of the destination server and a specific virtual function 608 of the destination server.

In a step 508, the virtual function drive program 605 sends a control signal to the interface 609 of the virtual function drive program to continue an execution of tasks of the guest operating system.

In a step 509, the interface 609 of the virtual function drive program notifies the virtual function drive program 605 to continue the execution of tasks of the guest operating system. The virtual function drive program 605 again receives tasks from the processor of the user space 102 through the interface 609 of the virtual function drive program, and these tasks may not visit the specific virtual hardware 408 of the source server, but change to visit the specific virtual hardware 608 of the destination server.

In a step 510, the VMLU QOM 604 notifies the Libvirt 601 that the live migration is done, and then the Libvirt 601 clears distributed hardware resources on the source server. At this point, the migration recovery path is done.

Combined with embodiments of the migration storage path and the migration recovery path, the present disclosure may realize the live migration of the virtualization specific integrated circuit (ASIC)

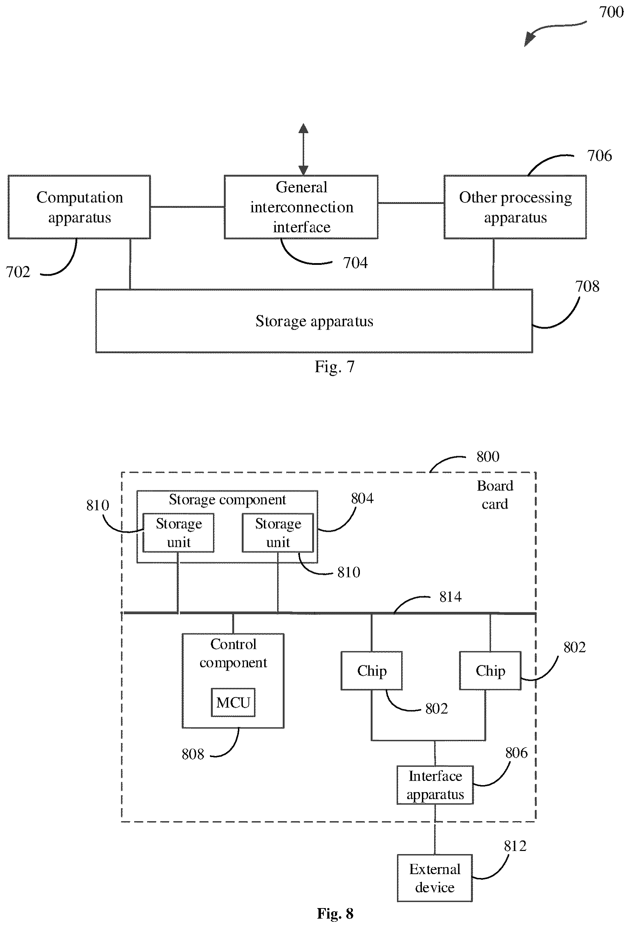

Fig. 7 is a structural diagram of an integrated circuit apparatus 700 according to an embodiment of the present disclosure. As shown in Fig. 7, the integrated circuit apparatus 700 is an artificial intelligence on-chip system in the above-mentioned plurality of embodiments. The integrated circuit apparatus 700 includes a computation apparatus 702, which may be the computation apparatus 130 in Fig. 1. In addition, the integrated circuit apparatus 700 also includes a general interconnection interface 704 and other processing apparatuses 706.

Other processing apparatuses 706 may be at least one or more of general-purpose/special-purpose processors such as a central processing unit, a graphics processing unit, an artificial intelligence processor, and the like, and the number of processors is not restrictive but is determined according to actual needs. Other processing apparatuses 706 may serve as an interface that connects the computation apparatus 702 and an external data and control. Other processing apparatuses 706 may perform basic controls such as moving data, starting and stopping the computation apparatus 702, and the like. Other processing apparatuses 706 may cooperate with the computation apparatus 702 to finish the computation task.

The general interconnection interface 704 may also be configured to transmit data and control instructions between the computation apparatus 702 and other processing apparatuses 706. For example, the computation apparatus 702 may obtain required input data from other processing apparatuses 706 through the general interconnection interface 704, and write the required input data to a storage unit of the computation apparatus 702. Further, the computation apparatus 702 may obtain a control instruction from other processing apparatuses 706 through the general interconnection interface 704, and write the control instruction to a control caching unit of the computation apparatus 702. Alternatively or optionally, the general interconnection interface 704 may read data in the storage unit of the computation apparatus 702 and transmit the data to other processing apparatuses 706.

The integrated circuit apparatus 700 also includes a storage apparatus 708, which may be connected to the computation apparatus 702 and other processing apparatuses 706 respectively. The storage apparatus 708 is configured to store data of the computation apparatus 702 and data of other processing apparatuses 706. The storage apparatus is particularly suitable for storing to-be-computed data that is not be entirely stored in the computation apparatus 702 or other computation apparatuses 706.

According to different application scenarios, the integrated circuit apparatus 700 may be used as an SOC (system on chip) of a mobile phone, a robot, a drone, a video capture device, and the like, which may effectively reduce a core area of a control part, and increase a processing speed, and reduce overall power consumption. In this case, the general interconnection interface 700 of the integrated circuit apparatus 700 may be connected to some components of the device. The components may be a camera, a monitor, a mouse, a keyboard, a network card, or a WIFI interface.

The present disclosure also discloses a chip or an integrated circuit chip, which includes the integrated circuit apparatus 700. The present disclosure also discloses a chip package structure, which includes the above-mentioned chip.

In another embodiment, the present disclosure provides a board card, which includes the above chip package structure. Referring to Fig. 8, in addition to including the above-mentioned chip 802, the board card 800 may further include other matching components. The matching components include, but are not limited to, a storage component 804, an interface apparatus 806, and a control component 808.

The storage component 804 is connected to the chip 802 in the chip package structure through a bus 814, and the storage component 804 is configured to store data. The storage component 804 may include a plurality of groups of storage units 810.

The interface apparatus 806 may be electrically connected to the chip 802 inside the chip package structure. The interface apparatus 806 is configured to implement data transfer between the chip 802 and an external device 812 (such as a server or a computer). In this embodiment, the interface apparatus 806 is a standard PCIe interface, and to-be-processed data is transmitted from the server to the chip 802 through the standard PCIe interface to realize data transfer. The computation result of the chip 802 is still transmitted back by the interface apparatus 806 to the external device 812.

A control component 808 is electrically connected to the chip 802 to monitor a state of the chip 802. Specifically, the chip 802 and the control component 808 may be electrically connected through an SPI (serial peripheral interface). The control component 808 may include an MCU (micro controller unit).

In another embodiment, the present disclosure provides an electronic device or an apparatus, which includes the above board card 800. According to different application scenarios, the electronic device or the apparatus may include a data processing apparatus, a robot, a computer, a printer, a scanner, a tablet, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device. The vehicle includes an airplane, a ship, and/or a car; the household appliance includes a television, an air conditioner, a microwave oven, a refrigerator, an electric rice cooker, a humidifier, a washing machine, an electric lamp, a gas cooker, and a range hood; and the medical device includes a nuclear magnetic resonance spectrometer, a B-ultrasonic scanner, and/or an electrocardiograph.

Another embodiment of the present disclosure provides a computer-readable storage medium, on which computer program code is stored. The method in Fig. 3 or Fig. 5 may be implemented when the computer program code is run by the processor.

The present disclosure may realize live migration of information of drive program, information of firmware, information of hardware, context information and state information of the virtual hardware from the source server to the destination server. The present disclosure may specifically realize live migration of a virtual computation apparatus, a virtual video encoding and decoding apparatus, a virtual JPEG encoding and decoding apparatus of an application specific integrated circuit.

The foregoing contents may be better understood according to the following articles:
Article A1. A system for realizing live migration, wherein the system is connected to a kernel space and comprises: hardware that is virtualized to a plurality of pieces of virtual hardware; and a read only memory (ROM) that stores firmware, wherein the firmware comprises: a physical function configured to: receive a live migration activation request from the kernel space, wherein the live migration activation request specifies specific virtual hardware, wherein the specific virtual hardware is one of the plurality of virtual hardware; send a to-be-migrated instruction to the kernel space, wherein the to-be-migrated instruction records to-be-migrated data, wherein the to-be-migrated data is related to the specific virtual hardware; take out the to-be-migrated data in batches from the specific virtual hardware and send the to-be-migrated data to the kernel space; and send an end signal to the kernel space after the to-be-migrated data is sent.
Article A2. The system of A1, wherein the hardware comprises a computation apparatus, the specific virtual hardware is a specific virtual computation apparatus, and the computation apparatus comprises: an intelligence processing apparatus configured to perform a convolution computation of a neural network; and a shared storage unit configured to temporarily store a computation intermediate value of the convolution computation, wherein the shared storage unit is virtualized to a plurality of virtual shared storage units, and the specific virtual computation apparatus corresponds to one virtual shared storage unit, wherein the to-be-migrated data includes the computation intermediate value stored in the virtual shared storage unit.
Article A3. The system of A2, wherein the computation apparatus further comprises: a storage unit core that is virtualized to a plurality of virtual storage unit cores, and the specific virtual computation apparatus is configured with one virtual storage unit core, wherein the to-be-migrated data includes data stored in the virtual storage unit core.
Article A4. The system of A1, wherein the hardware comprises a storage apparatus that is virtualized to a plurality of virtual storage apparatuses, the specific virtual hardware is a specific virtual storage apparatus, and the to-be-migrated data includes data stored in the specific virtual storage apparatus.
Article A5. The system of A1, wherein the hardware includes a video encoding and decoding apparatus, and the specific virtual hardware is a specific virtual video encoding and decoding apparatus.
Article A6. The system of A1, wherein the hardware includes a JPEG encoding and decoding apparatus, and the specific virtual hardware is a specific virtual JPEG encoding and decoding apparatus.
Article A7. The system of A1, wherein the firmware also includes a plurality of virtual functions, and the specific virtual hardware is managed by the physical function and corresponds to one virtual function, and the physical function leaves the virtual function unused in response to the live migration activation request.
Article A8. The system of claim A1, wherein after the to-be-migrated data is sent, the physical function releases the hardware and the virtual function.
Article A9. The system of claim A1, wherein the to-be-migrated data comprises one of drive program information, firmware information, hardware information, context information and state information.
Article A10. The system of A1, wherein the kernel space is connected to a user space that carries a user virtual machine, wherein the user virtual machine initializes the live migration activation request.
Article A11. The system of A10, wherein the user virtual machine is a QEMU (quick emulator).
Article A12. The system of A10, wherein the kernel space sends the to-be-migrated instruction to the user virtual machine, and sends the to-be-migrated data to the user virtual machine.
Article A13. The system of A10, wherein the kernel space carries a physical function drive program, and the user space includes a user end kernel space, wherein the user end kernel space carries a virtual function drive program; the physical function drive program receives the live migration activation request from the user virtual machine and sends the live migration activation request to the virtual function drive program, and then the virtual function drive program stops executing tasks from the user space temporarily.
Article A14. The system of A13, wherein the virtual function drive program does not return a control instruction to the user space, so as to stop executing the tasks temporarily.
Article A15. The system of A13, wherein the kernel space sends the end signal to the virtual function drive program, and the virtual function drive program continues execution of the tasks.
Article A16. The system of A13, wherein when execution of tasks from the user space is stopped temporarily, the virtual function drive program notifies the physical function drive program, and then the physical function drive program sends the live migration activation request to the physical function.
Article A17. A system for realizing live migration, wherein the system is connected to a kernel space and comprises: hardware that is virtualized to a plurality of pieces of virtual hardware; and a read only memory (ROM) that stores firmware, wherein the firmware comprises: a physical function configured to receive to-be-migrated data, wherein the to-be-migrated data is corresponded to specific virtual hardware, wherein the specific virtual hardware is one of the plurality of virtual hardware; and a plurality of virtual functions, and the specific virtual hardware is managed by the physical function and corresponds to one virtual function, wherein the physical function sends the to-be-migrated data to the specific virtual hardware through the virtual function, and the physical function sends an end signal to the kernel space after the to-be-migrated data is sent.
Article A18. The system of A17, wherein the hardware comprise as computation apparatus, the specific virtual hardware is a specific virtual computation apparatus, and the computation apparatus comprises: an intelligence processing apparatus configured to perform a convolution computation of neural network; and a shared storage unit configured to temporarily store a computation intermediate value of the convolution computation, wherein the shared storage unit is virtualized to a plurality of virtual shared storage units, and the specific virtual computation apparatus corresponds to one virtual shared storage unit, wherein the virtual function stores the computation intermediate value of the to-be-migrated data to the virtual shared storage unit.
Article A19. The system of A18, wherein the computation apparatus further comprises: a storage unit core that is virtualized to a plurality of virtual storage unit cores, and the specific virtual computation apparatus is configured with one virtual storage unit core, wherein the virtual function stores corresponding data in the to-be-migrated data to the virtual storage unit core.
Article A20. The system of A17, wherein the hardware includes a storage apparatus that is virtualized to a plurality of virtual storage apparatuses, the specific virtual hardware is a specific virtual storage apparatus, and the virtual function stores corresponding data in the to-be-migrated data to the virtual storage apparatus
Article A21. The system of A17, wherein the hardware includes a video encoding and decoding apparatus, and the specific virtual hardware is a specific virtual video encoding and decoding apparatus.
Article A22. The system of A17, wherein the hardware includes a JPEG encoding and decoding apparatus, and the specific virtual hardware is a specific virtual JPEG encoding and decoding apparatus.
Article A23. The system of A17, wherein the to-be-migrated data includes one of drive program information, firmware information, hardware information, context information and state information.
Article A24. The system of A17, wherein the kernel space is connected to a user space that carries a user virtual machine, wherein the user virtual machine receives the to-be-migrated data from off-chip and initializes the live migration activation request.
Article A25. The system of A24, wherein the user virtual machine is a QEMU.
Article A26. The system of A24, wherein the kernel space carries physical function drive program configured to receive the to-be-migrated data from the user virtual machine and send the to-be-migrated data to the physical function in response to the live migration activation request.
Article A27. The system of A26, wherein the physical function drive program sends end signal to the user virtual machine.
Article A28. The system of A27, wherein the user space includes user end kernel space that carries virtual function drive program; the user virtual machine notifies the virtual function drive program that the live migration has been done in response to the end signal; the virtual function drive program receives tasks from the user space; the task controls the specific virtual hardware.
Article A29. The system of A28, wherein the user virtual machine changes state of base address register in response to the end signal, and the base address register points to the specific virtual hardware.
Article A30. An integrated circuit apparatus comprising the system of any one of articles A1 to A19.
Article A31. A board card comprising the integrated circuit apparatus of article A30.
Article A32, a method for implementing live migration storage path in a system, wherein the system comprises hardware that is virtualized to a plurality of pieces of virtual hardware, and the method comprises: receiving a live migration activation request, which specifies specific virtual hardware, wherein the specific virtual hardware is one of the plurality of virtual hardware; leaving a specific virtual function unused, wherein the specific virtual function is corresponded to the specific virtual hardware; sending to-be-migrated data in batches from the specific virtual hardware; and sending an end signal after the to-be-migrated data is sent.
Article A33. The method of A32, wherein the hardware is one of a computation apparatus, a storage apparatus, a video encoding and decoding apparatus and a JPEG encoding and decoding apparatus of an artificial intelligence on-chip system.
Article A34, a method for implementing live migration recovery path in a system, wherein the system includes hardware that is virtualized to a plurality of pieces of virtual hardware, and the method comprises: receiving to-be-migrated data, which is corresponded to a specific virtual hardware, wherein the specific virtual hardware is one of the plurality of virtual hardware; leaving a specific virtual function unused, wherein the specific virtual function is corresponded to the specific virtual hardware; sending the to-be-migrated data to the specific virtual hardware through the specific virtual function; and sending an end signal after the to-be-migrated data is sent.
Article A35. The method of A34, wherein the hardware is one of a computation apparatus, a storage apparatus, a video encoding and decoding apparatus and a JPEG encoding and decoding apparatus of an artificial intelligence on-chip system.
Article A36. A computer-readable storage medium, on which computer program code of live migration is stored, wherein when the computer program code is operated by a processor, the method of any one of the claim 32 to claim 35 is implemented.

## Claims

1. A method for implementing a live migration storage path in a system, wherein the system comprises hardware, which is virtualized to a plurality of pieces of virtual hardware, and the method comprises:
receiving a live migration activation request, which specifies specific virtual hardware, wherein the specific virtual hardware is one of the plurality of virtual hardware;
leaving a specific virtual function unused, wherein the specific virtual function is corresponded to the specific virtual hardware;
sending to-be-migrated data in batches from the specific virtual hardware; and
sending an end signal after the to-be-migrated data is sent.

2. The method of claim 1, **characterized in that** the hardware is one of a computation apparatus, a storage apparatus, a video encoding and decoding apparatus and a JPEG encoding and decoding apparatus of an artificial intelligence on-chip system.

3. The method according to claim 1, **characterized in that** the live migration activation request is initialized by a user virtual machine in a user space, and the user virtual machine is a Quick Emulator (QEMU); the user virtual machine transmits the live migration activation request to a physical function driver in a kernel space by invoking an interface of the physical function driver.

4. The method according to claim 1, **characterized in that** after leaving the specific virtual function unused, the specific virtual function stops communicating with the user space, while other virtual functions and their corresponding virtual hardware in the system keep operating normally, so as to avoid interference from task instructions of the user space during the process of sending the to-be-migrated data.

5. The method according to claim 1, **characterized in that** the to-be-migrated data includes at least two types of information selected from driver information, firmware information, hardware information, context information and state information related to the specific virtual hardware; the state information includes a context state of a state machine, a register state, an internal hardware state, and a context state of variables and constants during software operation.

6. The method according to claim 1, **characterized in that** before sending the to-be-migrated data in batches from the specific virtual hardware, the method further comprises: sending a to-be-migrated instruction to the kernel space, where the to-be-migrated instruction records the total amount, data type and storage location of the to-be-migrated data, so that the kernel space can prepare resources for receiving the to-be-migrated data.

7. The method according to claim 1, **characterized in that** after sending the end signal, the method further comprises: releasing the hardware resources occupied by the specific virtual hardware and the specific virtual function.

8. The method according to claim 1, **characterized in that** the system further includes a read-only memory (ROM) storing firmware, and the firmware includes a physical function; the physical function is configured to execute the steps of receiving the live migration activation request, leaving the specific virtual function unused, sending the to-be-migrated data in batches, and sending the end signal.

9. A method for implementing a live migration recovery path in a system, wherein the system includes hardware, which is virtualized to a plurality of pieces of virtual hardware, and the method comprises:
receiving to-be-migrated data, which is corresponded to a specific virtual hardware, wherein the specific virtual hardware is one of the plurality of virtual hardware;
leaving a specific virtual function unused, wherein the specific virtual function is corresponded to the specific virtual hardware;
sending the to-be-migrated data to the specific virtual hardware through the specific virtual function; and
sending an end signal after the to-be-migrated data is sent.

10. The method of claim 9, wherein the hardware is one of a computation apparatus, a storage apparatus, a video encoding and decoding apparatus and a JPEG encoding and decoding apparatus of an artificial intelligence on-chip system.

11. The method according to claim 9, **characterized in that** the to-be-migrated data is received by a user virtual machine in a user space connected to the kernel space from an off-chip source; the user virtual machine is a Quick Emulator (QEMU), and the user virtual machine transmits the to-be-migrated data to a physical function driver in a kernel space by invoking an interface of the physical function driver.

12. The method according to claim 9, **characterized in that** after leaving the specific virtual function unused, the specific virtual function stops communicating with the user space, while other virtual functions and their corresponding virtual hardware in the system keep operating normally, so as to prevent external tasks of the user space from interfering with the writing of the to-be-migrated data into the specific virtual hardware.

13. The method according to claim 9, **characterized in that** the to-be-migrated data includes at least two types of information selected from driver information, firmware information, hardware information, context information and state information related to the specific virtual hardware.

14. The method according to claim 9, **characterized in that** the system further includes a read-only memory (ROM) storing firmware, and the firmware includes a physical function and a plurality of virtual functions; the physical function is configured to receive the to-be-migrated data, and send the to-be-migrated data to the specific virtual hardware through the specific virtual function, and send the end signal.

15. A computer readable storage medium, on which computer program code of live migration is stored, wherein when the computer program code is operated by a processor, the method of any one of the claim 1 to claim 14 is implemented.
